# EUROPEAN PATENT SPECIFICATION

(11) **EP 3 626 598 B1**
(45) Date of publication and mention of the grant of the patent: **22.12.2021**
(21) Application number: 18207921.0
(22) Date of filing: 23.11.2018
(51) Int. Cl.: B63H 9/04, B63H 21/20

(54) **A ZERO EMISSION POWER GENERATION SAILING SHIP**
EMISSIONSFREIES STROMERZEUGUNGSSEGELSCHIFF
VOILIER DE PRODUCTION D'ÉLECTRICITÉ À ÉMISSION NULLE

(30) Priority: 20.09.2018 JP 2018175979
(43) Date of publication of application: 25.03.2020
(73) Proprietor: Ouchi Ocean Consultant, Inc., Saku-gun, Nagano 389-0111 (JP)
(72) Inventor: OUCHI, Kazuyuki, Nagano, 389-0111 (JP)
(74) Representative: Grünecker Patent- und Rechtsanwälte PartG mbB

(56) References cited:
- EP-A1- 2 722 272
- WO-A1-2005/012079
- JP-A- 2001 270 496
- KR-A- 20170 012 015
- US-A1- 2009 189 396
- Ibrahim S Seediek ET AL: "Double Acting Diesel Engine View project Study of optimum design features of marine diesel engine View project THE HYDROGEN-FUELLED INTERNAL COMBUSTION ENGINES FOR MARINE APPLICATIONS WITH A CASE STUDY", , 31 December 2015 (2015-12-31), XP055587931, Retrieved from the Internet: URL:https://www.researchgate.net/publicati on/275658599_The_hydrogen-fuelled_internal _combustion_engines_for_marine_application s_with_a_case_study [retrieved on 2019-05-13]

## Description

### [Technical field]

The present invention relates to a zero emission power generation sailing ship.

### [Back ground of the invention]

The applicant of the present invention proposed in Patent Document No. 1 a power generation sailing ship comprising a sail provided on a deck, a water turbine located outside a hull, a power generator driven by the water turbine, a water electrolyzing device driven by the electric power generated by the power generator, a hydrogenated aromatic compound generator for reacting aromatic compound with hydrogen generated by the water electrolyzing device so as to generate hydrogenated aromatic compound, and aromatic compound / hydrogenated aromatic compound storage tanks, wherein ocean wind power is converted to electric power, the electric power is converted to hydrogen, the hydrogen is converted to hydrogenated aromatic compound which is stable substance, and the hydrogenated aromatic compound is safely sea transported to a land energy base. WO 2005/012079A1 relates to an unmanned ocean vehicle.

### [Prior art documents]

### [Patent document]

Patent Document No.1: Japanese Patent No. 6320356 B2 (US2017/022976 A1, EP3121109 A1)

### [Non-patent document]

Non-Patent Document No.1: A software for selecting optimized course of a sailing ship WCNavi : Collection of lecture resumes p43-52, Result reports session of WIND CHALLENGER DEVELOPING PLAN 30.09.2017

### [Disclosure of invention]

### [Problem to be solved]

An object of the present invention is to take the power generation sailing ship of Japanese Patent No. 6320356 a step further so as to provide a zero emission power generation sailing ship, wherein generated electric power is consumed for electric demand in the ship or consumed for electric demand in the ship and for driving the ship in response to wind condition, thereby realizing zero emission navigation.

### [Means for solving the problem]

In accordance with the present invention, there is provided a zero emission power generation sailing ship as defined in claim 1.

Zero emission navigation wherein discharge amount of carbon dioxide is zero can be realized by converting ocean wind power to electric power, consuming a part of the electric power for electric demand in the ship and storing residual part of the electric power in an energy storage device when the wind is strong, while consuming a part of the electric power drawn from the energy storage device for electric demand in the ship and residual part of the electric power for driving the ship when the wind is light, and also selecting course of the ship with a course selecting device provided with a computer program for selecting course based on ocean wind forecasting data so as to prevent exhaustion of the electric power stored in the energy storage device.

In accordance with the present invention, the zero emission power generation sailing ship comprises a water electrolyzing device driven by the electric power generated by the power generator-motor, a hydrogenated aromatic compound generator for reacting aromatic compound with hydrogen generated by the water electrolyzing device so as to generate hydrogenated aromatic compound, an aromatic compound storage tank, a hydrogenated aromatic compound storage tank, a hydrogen separator for separating hydrogenated aromatic compound into hydrogen and aromatic compound, and a hydrogen fueled power generator.

Hydrogenated aromatic compounds, which are reaction products between aromatic compounds and hydrogen, are stable substances that assume liquid state under normal temperature and normal pressure. Therefore, stable storage of electric energy can be realized by converting electric energy to hydrogenated aromatic compounds.

In accordance with a preferred aspect of the present invention, the hydrogen fueled power generator is a hydrogen fueled diesel engine.

In accordance with a preferred aspect of the present invention, the hydrogen fueled power generator is a fuel cell battery.

The hydrogen fueled power generator can be a hydrogen fueled diesel engine or a fuel cell battery. When a fuel cell battery is used as the hydrogen fueled power generator, emission of nitrogen oxides can be prevented.

In accordance with a preferred aspect of the present invention, the aromatic compound is benzene, toluene or naphthalene, and the hydrogenated aromatic compound is cyclohexane, methylcyclohexane or decalin.

Benzene, toluene and naphthalene are suitable for hydrogen carrier.

### [Effect of the invention]

In accordance with the present invention, there is provided a zero emission power generation sailing ship wherein generated electric power is consumed for electric demand in the ship or consumed for electric demand in the ship and for driving the ship in response to wind condition, thereby realizing zero emission navigation.

### [Brief description of the drawings]

Figure 1 is a structural view of a zero emission power generation sailing ship in accordance with a first preferred embodiment of the present invention.
Figure 2 is a structural view of a zero emission power generation sailing ship in accordance with a second preferred embodiment of the present invention.

### [Modes for carrying out the invention]

Zero emission power generation sailing ships in accordance with preferred embodiments of the present invention will be described.

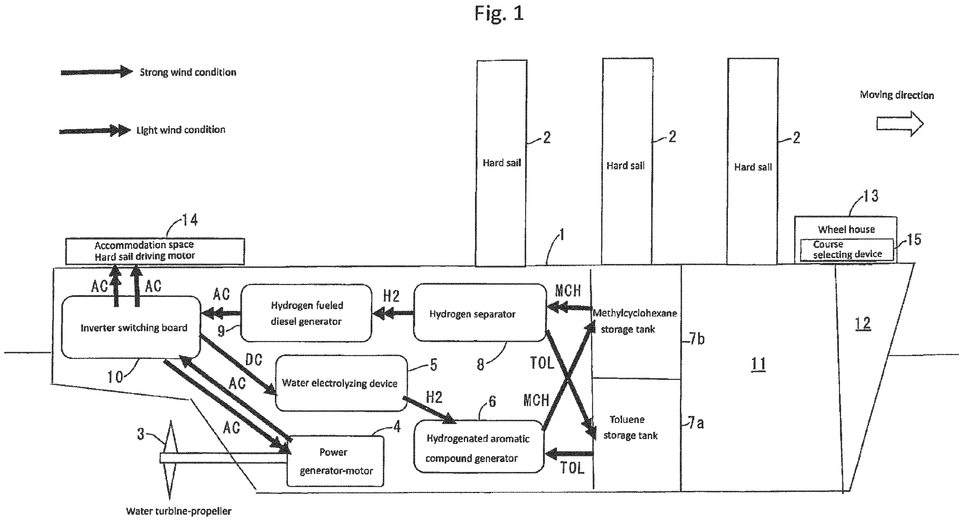

As shown in Figure 1, a power generation sailing ship 1 comprises a plurality of vertically telescopic hard sails 2 provided on a deck, a water turbine-propeller 3, a power generator-motor 4 which is driven by the water turbine-propeller 3 operating as a water turbine and drives the water turbine-propeller 3 operating as a propeller, a water electrolyzing device 5 driven by the electric power generated by the power generator-motor 4, a hydrogenated aromatic compound generator 6 for reacting toluene (TOL), which is an aromatic compound with hydrogen (H2) generated by the water electrolyzing device 5 so as to generate methylcyclohexane (MCH), which is a hydrogenated aromatic compound, a toluene storage tank 7a, a methylcyclohexane storage tank 7b, a hydrogen separator 8 for separating methylcyclohexane into hydrogen and toluene, and a hydrogen fueled diesel power generator 9. The power generator-motor 4 and the water electrolyzing device 5 are connected to each other through an inverter switchboard 10. The hydrogen fueled diesel power generator 9 and the power generator-motor 4 are also connected to each other through the inverter switchboard 10.

The water turbine-propeller 3 is located outside a stern hull. The power generator-motor 4, the water electrolyzing device 5, the hydrogenated aromatic compound generator 6, the toluene storage tank 7a, the methylcyclohexane storage tank 7b, the hydrogen separator 8, the hydrogen fueled diesel power generator 9, and the inverter switchboard 10 are located in the stern hull.

The power generation sailing ship 1 is a cargo ship and comprises a cargo space 11, a bow water ballast tank 12, a wheel house 13, an accommodation space 14, and various kinds of facilities not shown in Figure 1, such as pumps, cargo facilities, etc., which are necessary for a cargo ship.

The wheel house 13 is provided with a course selecting device 15 which is provided with a computer program for selecting course based on ocean wind forecasting data so as to prevent exhaustion of the electric power stored in the energy storage device, more specifically, methylcyclohexane stored in the methylcyclohexane storage tank 7b.

Operation of the power generation sailing ship 1 will be described.

When the power generation sailing ship 1 begins navigation, the toluene storage tank 7a is half filled with toluene and the methylcyclohexane storage tank 7b is half filled with methylcyclohexane.

The power generation sailing ship 1 moves basically by means of wind blowing on the hard sails 2.

The power generation sailing ship 1 moves in electric power generation mode when the wind is strong. Connection between the hydrogen fueled diesel generator 9 and the inverter switching board 10 is shut down. Ocean wind energy is converted to kinetic energy of the power generation sailing ship 1 through the hard sails 2 and the power generation sailing ship 1 moves.

The movement of the power generation sailing ship 1 generates sea water flow relative to the water turbine-propeller 3 so as to rotate the water turbine-propeller 3. The water turbine-propeller 3 operates as a water turbine so as to rotate the power generator-motor 4. The power generator-motor 4 operates as a power generator so as to generate electric power. A part of the generated AC electric power is supplied to the wheel house 13, accommodation space 14, motors for driving the hard sails 2 and various kinds of pumps and cargo facilities through the inverter switching board 10 as AC electric power and consumed for electric demand in the ship.

Residual part of the generated AC electric power is converted to DC electric power through the inverter switching board 10 and supplied to the water electrolyzing device 5. The water electrolyzing device 5 electrolyzes water so as to generate hydrogen. The generated hydrogen is supplied to the hydrogenated aromatic compound generator 6. Toluene is pump fed from the toluene storage tank 7a to the hydrogenated aromatic compound generator 6. Toluene and hydrogen react in the hydrogenated aromatic compound generator 6 so as to generate methylcyclohexane. Methylcyclohexane is pump fed from the hydrogenated aromatic compound generator 6 to and stored in the methylcyclohexane storage tank 7b.

A part of the ocean wind energy received by the hard sails 2 is converted to electric energy and consumed for electric demand in the ship and stored in the ship. Thus moving speed of the power generation sailing ship 1 is maintained at an appropriate level even under the strong wind.

The power generation sailing ship 1 moves in electrically driven mode when the wind is light. Connection between the water electrolyzing device 5 and the inverter switching board 10 is shut down.

Methylcyclohexane is pump fed from the methylcyclohexane storage tank 7b to the hydrogen separator 8. The hydrogen separator 8 separates methylcyclohexane into hydrogen and toluene. The separated toluene is pump fed to and stored in the toluene storage tank 7a. The separated hydrogen is supplied to the hydrogen fueled diesel generator 9. The hydrogen fueled diesel generator 9 operates by using hydrogen as fuel so as to generate electric power.

A part of the generated AC electric power is supplied to the wheel house 13, accommodation space 14, motors for driving the hard sails 2 and various kinds of pumps and cargo facilities through the inverter switching board 10 as AC electric power and consumed for electric demand in the ship.

Residual part of the generated AC electric power is supplied to the power generator-motor 4 through the inverter switching board 10 as AC electric power and consumed for driving the power generator-motor 4. The power generator-motor 4 operates as a motor so as to rotate the water turbine-propeller 3. The water turbine-propeller 3 operates as a propeller so as to drive and move the power generation sailing ship 1. Thus, decrease of ocean wind power received by the hard sails 2 under light wind is offset by the driving energy of the propeller, and moving speed of the power generation sailing ship 1 is maintained at an appropriate level even under the light wind.

The power generation sailing ship 1 can realize zero emission navigation wherein discharge amount of carbon dioxide is zero while accomplishing function of cargo ship provided that the size and the number of hard sails 2 and storage amount of the toluene storage tank 7a and the methylcyclohexane storage tank 7b are optimized so as to optimize storage amount of generated electric power, and course of the ship is selected by the course selecting device 15 provided with a computer program for selecting course based on ocean wind forecasting data so as to prevent exhaustion of methylcyclohexane in the methylcyclohexane storage tank 7b, and, in addition, navigation mode is appropriately switched depending on ocean wind condition between power generation mode and electrically driven mode. Ocean wind forecasting data are available from, for example, Japan's JRA-25 and JAR-55, USA's NCEP/NCAR Reanaylsis, NCEP CFSR and NCEP-MERA, and Europe's ERA-20C and ERA-interim. A computer program for selecting optimized course of a sailing ship based on aforementioned ocean wind forecasting data has been developed by Tokyo University (Refer to Non-Patent Document No. 1). Therefore, there can be developed a computer program for selecting optimized course of the power generation sailing ship 1 so as to prevent exhaustion of methylcyclohexane in the methylcyclohexane storage tank 7b by possessing aforementioned ocean wind forecasting data and using as reference the computer program for selecting optimized course of a sailing ship developed by Tokyo University.

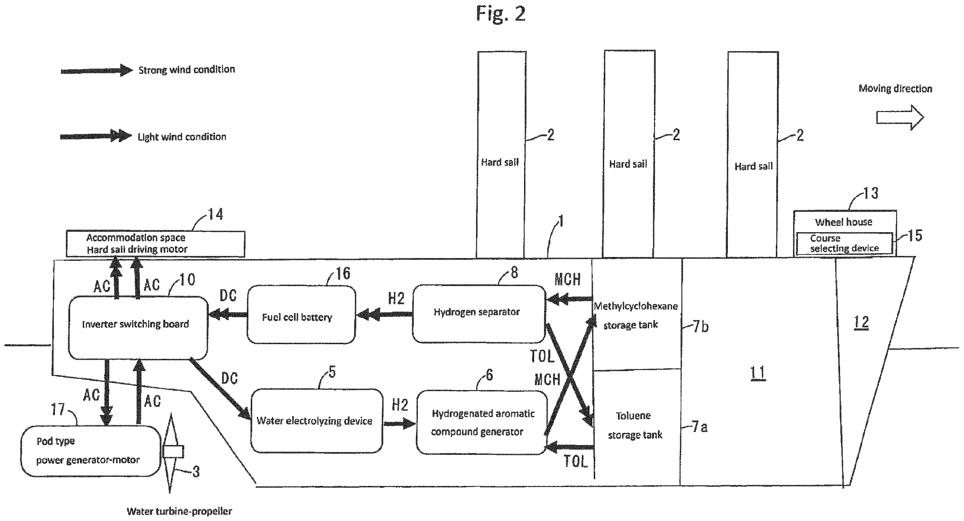

The hydrogen fueled diesel generator 9 is used as a power generator using hydrogen as fuel in the aforementioned preferred embodiment. However, as shown in Figure 2, a fuel cell battery 16 can be used instead of the hydrogen fueled diesel generator 9. In this case, generated DC electric power is converted to AC electric power through the inverter switching board 10 and consumed for electric demand in the ship and for driving power generator-motor 4. When a fuel cell battery 16 is used as the hydrogen fueled power generator, emission of nitrogen oxides can be prevented.

The power generator-motor 4 which is connected to the fixed axis water turbine-propeller 3 is installed in the ship hull in the aforementioned preferred embodiment. However, a pod type power generator-motor 17 comprising a power generator-motor connected to the water turbine-propeller 3 and installed in a pod can be located outside the ship hull as shown in Figure 2. Power generating efficiency and steering performance can be enhanced by appropriately changing direction of the water turbine-propeller 3.

Toluene is used as hydrogen carrier in the aforementioned preferred embodiment. Other kind of aromatic compound such as benzene or naphthalene can also be used as hydrogen carrier. In this case, cyclohexane and decalin are generated as hydrogenated aromatic compounds.

Hydrogen is converted to methylcyclohexane and stored in the aforementioned preferred embodiment. However, hydrogen can be converted to ammonia and stored or adsorbed by hydrogen storage alloy made of rare earth elements such as lanthanum, cerium, etc., and nickel, cobalt, etc., and stored.

Hydrogen can be highly compressed or low-temperature liquefied and stored instead of converted to other material or adsorbed by other material and stored.

Generated electric power can be directly stored in a battery. In this case, a battery is provided instead of the water electrolyzing device 5, the hydrogenated aromatic compound generator 6, the toluene storage tank 7a, the methylcyclohexane storage tank 7b, the hydrogen separator 8, and the hydrogen fueled diesel power generator 9.

### [Industrial applicability]

The present invention can be widely used in power generation sailing ships.

### [Explanation of reference numerals]

- 1: Power generation sailing ship
- 2: Hard sail
- 3: Water turbine-propeller
- 4: Power generator-motor
- 5: Water electrolyzing device
- 6: Hydrogenated aromatic compound generator
- 7a: Toluene storage tank
- 7b: Methylcyclohexane storage tank
- 8: Hydrogen separator
- 9: Hydrogen fueled diesel generator
- 10: Inverter switching board
- 11: Cargo space
- 12: Bow water ballast tank
- 13: Wheel house
- 14: Accommodation space
- 15: Course selecting device
- 16: Fuel cell battery
- 17: Pod type power generator-motor

## Claims

1. A zero emission power generation sailing ship comprising:
a sail (2) provided on a deck,
a water turbine-propeller (3),
a power generator-motor (4) which is driven by the water turbine-propeller (3) operating as a water turbine and drives the water turbine-propeller (3) operating as a propeller, and
an energy storage device (7a, 7b) for directly storing electric energy generated by the power generator-motor (4) or converting the electric energy into energy of a substance and storing the substance,
wherein the water turbine-propeller (3) operates as a water turbine and the power generator-motor (4) operates as a power generator so as to generate electric power and a part of the generated electric power is consumed for electric demand in the ship and residual part of the generated electric power is stored in the energy storage device when the wind is strong, while the power generator-motor (4) operates as a motor and the water turbine-propeller (3) operates as a propeller and a part of the electric power drawn from the energy storage device is consumed for electric demand in the ship and residual part of the electric power is consumed for driving the power generator-motor (4) operating as a motor when the wind is light, and
**characterized in that** the zero emission power generation sailing ship further comprises a course selecting device (15) provided with a computer program configured to select course based on ocean wind forecasting data so as to prevent exhaustion of the electric power stored in the energy storage device (7a, 7b),
a water electrolyzing device (5) driven by the electric power generated by the power generator-motor (4),
a hydrogenated aromatic compound generator (6) for reacting aromatic compound with hydrogen generated by the water electrolyzing device (5) so as to generate hydrogenated aromatic compound,
an aromatic compound storage tank (7a),
a hydrogenated aromatic compound storage tank (7b),
a hydrogen separator (8) for separating hydrogenated aromatic compound into hydrogen and aromatic compound, and
a hydrogen fueled power generator (9).

2. The zero emission power generation sailing ship of claim 1, wherein the hydrogen fueled power generator (9) is a hydrogen fueled diesel engine.

3. The zero emission power generation sailing ship of claim 1, wherein the hydrogen fueled power generator (9) is a fuel cell battery.

4. The zero emission power generation sailing ship of any one of claims 1 to 3, wherein the aromatic compound is benzene, toluene or naphthalene, and hydrogenated aromatic compound is cyclohexane, methylcyclohexane or decalin.

## Patentansprüche

1. Segelschiff mit Nullemissions-Stromerzeugung, das umfasst:
ein Segel (2), das auf einem Deck vorhanden ist,
einen Wasser-Turbinen-Propeller (3),
einen Stromgenerator-Motor (4), der von dem als eine Wasserturbine arbeitenden Wasser-Turbinen-Propeller (3) angetrieben wird und den als einen Propeller arbeitenden Wasser-Turbinen-Propeller (3) antreibt, sowie
eine Energie-Speicherungsvorrichtung (7a, 7b) zum direkten Speichern durch den Stromgenerator-Motor (4) erzeugter elektrischer Energie oder zum Umwandeln der elektrischen Energie in Energie einer Substanz und zum Speichern der Substanz,
wobei der Wasser-Turbinen-Propeller (3) als eine Wasserturbine arbeitet und der Stromgenerator-Motor (4) als ein Stromgenerator arbeitet, um elektrischen Strom zu erzeugen, und ein Teil des erzeugten elektrischen Stroms für Strombedarf in dem Schiff verbraucht wird und der verbleibende Teil des erzeugten elektrischen Stroms in der Energie-Speicherungsvorrichtung gespeichert wird, wenn der Wind stark ist, während der Stromgenerator-Motor (4) als ein Motor arbeitet und der Wasser-Turbinen-Propeller (3) als ein Propeller arbeitet und ein Teil des aus der Energie-Speicherungsvorrichtung entnommenen elektrischen Stroms für den Strombedarf in dem Schiff verbraucht wird und der verbleibende Teil des elektrischen Stroms zum Antreiben des Stromgenerator-Motors (4) verbraucht wird, der als ein Motor arbeitet, wenn der Wind schwach ist, und
**dadurch gekennzeichnet, dass** das Segelschiff mit Nullemissions-Stromerzeugung des Weiteren eine Kurs-Wählvorrichtung (15), die mit einem Computerprogramm versehen ist, das so konfiguriert ist, dass es einen Kurs auf Basis von Seewindvorhersage-Daten so wählt, dass Erschöpfung des in der Energie-Speicherungsvorrichtung (7a, 7b) gespeicherten elektrischen Stroms vermieden wird,
eine Wasserelektrolyse-Vorrichtung (5), die mit dem von dem Stromgenerator-Motor (4) erzeugten elektrischen Strom angetrieben wird,
eine Einrichtung (6) zum Erzeugen einer hydrierten aromatischen Verbindung, mit der eine aromatische Verbindung mit durch die Wasserelektrolyse-Vorrichtung (5) erzeugtem Wasserstoff zur Reaktion gebracht wird, um eine hydrierte aromatische Verbindung zu erzeugen,
einen Vorratsbehälter für aromatische Verbindung (7a),
einen Vorratsbehälter für hydrierte aromatische Verbindung (7b),
einen Wasserstoff-Abscheider (8) zum Trennen hydrierter aromatischer Verbindung in Wasserstoff und eine aromatische Verbindung, sowie
einen mit Wasserstoff betriebenen Stromgenerator (9) umfasst.

2. Segelschiff mit Nullemissions-Stromerzeugung nach Anspruch 1, wobei der mit Wasserstoff betriebene Stromgenerator (9) ein mit Wasserstoff betriebener Dieselmotor ist.

3. Segelschiff mit Nullemissions-Stromerzeugung nach Anspruch 1, wobei der mit Wasserstoff betriebene Stromgenerator (9) eine Brennstoffzellenbatterie ist.

4. Segelschiff mit Nullemissions-Stromerzeugung nach einem der Ansprüche 1 bis 3, wobei die aromatische Verbindung Benzol, Toluol oder Naphthalin ist und die hydrierte aromatische Verbindung Cyclohexan, Methylcyclohexan oder Decalin ist.

## Revendications

1. Voilier à génération de puissance à émission nulle comprenant :
une voile (2) disposée sur un pont,
un turbopropulseur à eau (3),
un générateur moteur de puissance (4) qui est entraîné par le turbopropulseur à eau (3) fonctionnant comme une turbine à eau et qui entraîne le turbopropulseur à eau (3) fonctionnant comme une hélice, et
un dispositif de stockage d'énergie (7a, 7b) destiné à stocker directement l'énergie électrique générée par le générateur moteur de puissance (4) ou à convertir l'énergie électrique en énergie d'une substance et stocker la substance,
dans lequel le turbopropulseur à eau (3) fonctionne comme une turbine à eau et le générateur moteur de puissance (4) fonctionne comme un générateur de puissance de sorte à générer de la puissance électrique, et une partie de la puissance électrique générée est consommée dans la demande électrique du navire et une partie résiduelle de la puissance électrique générée est stockée dans le dispositif de stockage d'énergie lorsque le vent est fort ; alors que le générateur moteur de puissance (4) fonctionne comme un moteur et que le turbopropulseur à eau (3) fonctionne comme une hélice et qu'une partie de la puissance électrique consommée auprès du dispositif de stockage d'énergie est consommée dans la demande électrique du navire et qu'une partie résiduelle de la puissance électrique est consommée pour entraîner le générateur moteur de puissance (4) fonctionnant comme un moteur lorsque le vent est faible, et
**caractérisé en ce que** le voilier à génération de puissance à émission nulle comprend en outre un dispositif de sélection de course (15) doté d'un programme informatique configuré pour sélectionner une course sur la base des données de prévision de vent sur l'océan de sorte à empêcher toute fuite de l'énergie électrique stockée dans le dispositif de stockage d'énergie (7a, 7b),
un dispositif d'électrolyse de l'eau (5) entraîné par la puissance électrique générée par le générateur moteur de puissance (4),
un générateur de composé aromatique hydrogéné (6) destiné à faire réagir un composé aromatique avec l'hydrogène généré par le dispositif d'électrolyse de l'eau (5) de sorte à générer un composé aromatique hydrogéné,
un réservoir de stockage de composé aromatique (7a,
un réservoir de stockage de composé aromatique hydrogéné (7b),
un séparateur d'hydrogène (8) destiné à séparer le composé aromatique hydrogéné en hydrogène et en composé aromatique, et
un générateur de puissance alimenté à l'hydrogène (9).

2. Voilier à génération de puissance à émission nulle selon la revendication 1, dans lequel le générateur de puissance alimenté à l'hydrogène (9) est un moteur diesel alimenté à l'hydrogène.

3. Voilier à génération de puissance à émission nulle selon la revendication 1, dans lequel le générateur de puissance alimenté à l'hydrogène (9) est une batterie de pile à combustible.

4. Voilier à génération de puissance à émission nulle selon l'une quelconque des revendications 1 à 3, dans lequel le composé aromatique est du benzène, du toluène ou du naphtalène, et le composé aromatique hydrogéné est du cyclohexane, du méthyle cyclohexane ou de la décaline.
